# DEMANDE DE BREVET EUROPEEN

(11) **EP 2 905 177 A1**
(43) Date de publication de la demande: **12.08.2015**
(21) Numéro de dépôt: 15154117.4
(22) Date de dépôt: 06.02.2015
(51) Int. Cl.: B60R 7/02

(54) **Dispositif de soutien d'éléments a l'interieur du coffre d'un véhicule automobile**

(30) Priorité: 10.02.2014 FR 1450998
(71) Demandeur: Azur Concept Industrie, 83440 Tourettes (FR)
(72) Inventeur: Navard, Guy, 06130 Grasse (FR)
(74) Mandataire: de Zeeuw, Johan Diederick

(57) **Abrégé**

La présente invention concerne un dispositif pour fixer au moins une cloison à l'intérieur du coffre d'un véhicule automobile dans lequel ledit dispositif comprend un châssis comportant des éléments mutuellement connectés afin de former, en combinaison, un cadre, dans lequel deux éléments longitudinaux sont adaptés pour être positionnés dans le sens de direction du véhicule et deux éléments transversaux sont adaptés pour être positionnés de façon essentiellement perpendiculaire par rapport au véhicule et dans lequel les deux éléments transversaux dudit cadre disposant d'un rail permettant de recevoir en leur intérieur un premier et un deuxième support, chacun dudit support étant adapté pour fixer sur lui-même la partie inférieure de cette au moins une cloison, dans lequel le premier et le deuxième support sont chacun connectés avec un mécanisme permettant de bloquer et de débloquer ledit support dans le rail afin d'autoriser le déplacement de l'ensemble des supports (40) et de la cloison par rapport aux éléments transversaux.

## Description

### Domaine de l'invention

La présente invention concerne un dispositif pour fixer au moins un support à l'intérieur du coffre d'un véhicule automobile.

### Etat de la technique

Dans l'art antérieur, il est connu que des objets peuvent se déplacer à l'intérieur du coffre d'un véhicule, tel qu'une voiture, pendant leur transport. Le coffre traditionnel d'un véhicule automobile offre un espace libre qui ne prévoit aucun soutien pour les différents objets placés à l'intérieur dudit coffre et éviter que ceux-ci ne se déplacent involontairement ou ne se renversent à l'intérieur de ce coffre.

Plusieurs tentatives ont été proposées dans l'optique d'améliorer le soutien d'objets stockés à l'intérieur du coffre d'un véhicule automobile et assurer ainsi le maintien desdits objets pendant leur transport. En effet, une option existe selon laquelle il est possible d'installer un filet sur le sol du coffre d'un véhicule automobile. Le filet peut être présent sur le sol du coffre et l'utilisateur peut utiliser ledit filet en cas de besoin.

L'utilisation d'un tel filet peut s'avérer utile pour des objets solides et relativement robustes. En revanche, l'utilisation de ce type de filet n'est pas adaptée pour le maintien d'objets plus délicats.

Dans l'art antérieur, des supports sont connus, lesquels supports étant fixés dans le sens perpendiculaire du déplacement d'un véhicule automobile. Cela signifie que, dès lors que le coffre d'un véhicule automobile est ouvert, le support s'étend dans le sens transversal dudit véhicule. Un tel type de support peut s'avérer utile pour maintenir des objets de forme libre pendant leur transport. Un des inconvénients lié à l'utilisation d'un tel type de support réside dans le fait que ledit support représente une barrière qui limite l'accessibilité au coffre du véhicule automobile concerné.

En considération des observations ci-dessus, le but de l'invention consiste à fournir un dispositif pour offrir un support aux objets installés à l'intérieur du coffre d'un véhicule automobile sans pour autant que la présence dudit dispositif ne limite l'accessibilité à l'intérieur dudit coffre.

### Objet de l'invention

Pour la raison évoquée dans le paragraphe qui précède ci-dessus, l'objet de la présente est un dispositif pour fixer au moins une cloison à l'intérieur du coffre d'un véhicule automobile dans lequel ledit dispositif comprend un châssis comportant des éléments mutuellement connectés afin de former, en combinaison, un cadre, dans lequel deux éléments longitudinaux sont adaptés pour être positionnés dans le sens de direction du véhicule et deux éléments transversaux sont adaptés pour être positionnés de façon essentiellement perpendiculaire par rapport au véhicule et dans lequel les deux éléments transversaux dudit cadre disposant d'un rail permettant de recevoir en leur intérieur un premier et un deuxième support, chacun dudit support étant adapté pour fixer sur lui-même la partie inférieure de cette au moins une cloison, dans lequel le premier et le deuxième support sont chacun connectés avec un mécanisme permettant de bloquer et de débloquer ledit support dans le rail afin d'autoriser le déplacement de l'ensemble des supports et de la cloison par rapport aux éléments transversaux.

Selon la présente invention, le dispositif permettant de fixer au moins une cloison à l'intérieur du coffre d'un véhicule automobile comprend un châssis permettant d'obtenir la fixation du dispositif sur le sol du coffre dudit véhicule automobile. Cela signifie que le dispositif ne comprend pas d'éléments de fixation tels que des pieds indépendants, mais un ensemble d'éléments formant ensemble un seul châssis se présentant sous la forme d'un cadre permettant une fixation simple et fiable du dispositif dans une position déterminée.

Les autres parties du dispositif, telles que des supports permettant de maintenir la partie inférieure des cloisons, sont toutes fixées sur le châssis en forme de cadre. L'ensemble forme un dispositif solide et pratique.

Le châssis est adapté pour supporter la cloison dans le sens longitudinal du déplacement du véhicule automobile.

Selon un mode de réalisation préféré de la présente invention, les éléments permettant de former le cadre sont réalisés en aluminium.

Selon un mode de réalisation préféré de la présente invention, les éléments permettant de former le cadre sont mutuellement connectés avec des angles.

Selon un mode de réalisation préféré de la présente invention, l'angle est composé d'un matériau tel que du plastique ou métallique.

Selon un mode de réalisation préféré de la présente invention, le dispositif est pourvu d'agrafes permettant la fixation du châssis sur le sol du coffre d'un véhicule automobile.

Selon un mode de réalisation préféré de la présente invention, les éléments sont adaptés pour recevoir et fixer des anneaux.

Selon un mode de réalisation préféré de la présente invention, les éléments permettant de former le cadre sont pourvus d'un dispositif lumineux tel qu'une lampe.

### Brève description des dessins

Les but, objet et caractéristiques de la présente invention ainsi que ses avantages apparaîtront plus clairement à la lecture de la description qui suit, des modes de réalisation préférés du dispositif de soutien selon l'invention, faite en référence aux dessins dans lesquels :
- la figure 1 montre l'assemblage d'un cadre formant l'élément avec lequel le dispositif de soutien selon l'invention est fixé à l'intérieur du coffre d'un véhicule automobile,
- la figure 2 représente en détail une pièce permettant de former un angle du cadre selon la figure 1,
- la figure 3 montre une vue schématique une possible fixation du cadre selon la figure 1 sur le fond du coffre d'un véhicule automobile,
- la figure 4 représente le dispositif de soutien selon l'invention lorsque celui-ci est assemblé, et
- la figure 5 montre le dispositif selon la figure 4 positionné à l'intérieur du coffre d'un véhicule automobile afin de soutenir des objets tels que des sacs, par exemple.

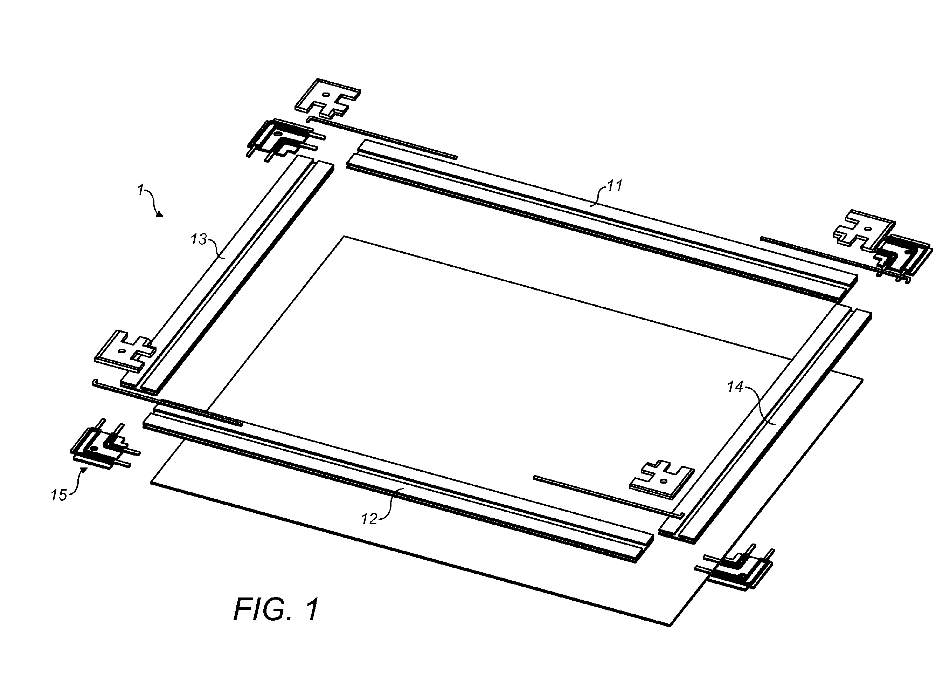

La figure 1 montre l'assemblage d'un cadre permettant de former la partie du dispositif de soutien selon la présente invention avec lequel ledit dispositif est fixé sur le sol du coffre d'un véhicule automobile.

Le cadre 1 comprend deux éléments ou rails 11, 12 positionnés de façon essentiellement parallèle. Le cadre 1 comprend également des éléments ou rails 13, 14, positionnés de façon essentiellement parallèle et s'étendant dans une direction essentiellement perpendiculaire par rapport aux éléments 11, 12.

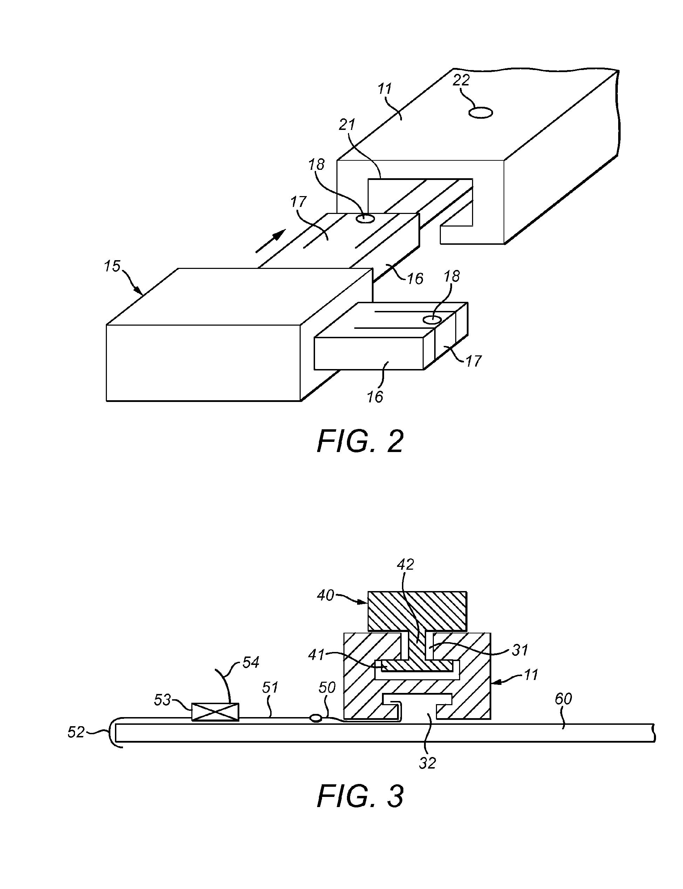

Les éléments 11, 12, 13 et 14 sont connectés grâce à quatre angles 15. Un mode de réalisation d'un tel angle est représenté en détail sur la figure 2. Les éléments 11, 12, 13 et 14, assemblés à l'aide des angles 15, permettent de réaliser ainsi un cadre rectangulaire formant la base du dispositif de soutien selon l'invention.

Les éléments 11, 12, 13 et 14 sont réalisés grâce à un processus d'extrusion. L'aluminium, par exemple, est un matériau adapté permettant la réalisation les différents éléments susvisés 11, 12, 13 et 14. Les éléments 11, 12, 13 et 14 constituent des rails permettant de recevoir, en leur intérieur, des supports tel que représenté sur la figure 3.

Lors de l'installation du cadre 1 selon la figure 1, les éléments 13 et 14 sont adaptés pour se positionner dans le sens de la longueur du véhicule automobile dans lequel ledit cadre est installé. Cela signifie, en règle générale, que lesdits éléments sont installés dans le sens dans lequel le véhicule automobile se déplace. Les éléments 11 et 12 sont adaptés pour être positionnés dans une direction perpendiculaire par rapport au sens de la longueur dudit véhicule automobile.

Au sein de la présente description, les éléments 13 et 14 sont identifiés comme étant des éléments « longitudinaux ». Les éléments 11 et 12 sont, quant à eux, identifiés comme étant des éléments « transversaux ».

La figure 2 représente un angle 15 ainsi que des éléments utilisés pour fixer ledit angle 15 aux extrémités des éléments 11, 12, 13 et 14 tels que montrés sur la figure 1. A titre d'exemple, l'extrémité de l'élément 11 est représentée. Les fixations des angles 15 aux extrémités des autres éléments 12, 13 et 14 sont réalisées de façon similaire.

Pour des raisons de clarté, l'angle 15 est représenté sur la figure 2 avec sa face inférieure dirigée vers le haut.

L'angle 15 est pourvu d'une protubérance ou carotte d'engagement 16 permettant de fixer l'angle 15 à l'intérieur de l'extrémité de l'élément 11. La protubérance 16 est elle-même pourvue d'une languette 17 munie d'un plot 18. La languette 17 est adaptée pour pouvoir de déplacer de façon élastique par rapport à la protubérance 16. Le plot 18 est positionné afin de pouvoir, comme cela est montré sur la figure 2, avancer par rapport au niveau de la protubérance 16.

La protubérance 16 est avancée afin de pouvoir pénétrer à l'intérieur de l'élément 11 afin de fixer l'angle 15 à l'intérieur de l'extrémité dudit élément 11. Avant son introduction, le renflement 18 entre en contact avec l'extrémité de l'élément 11 au bord 21. Le renflement 18 se trouvant sur une ailette 17, ledit renflement 18 peut être déplacé afin de permettre l'introduction de la protubérance 16 à l'intérieur de l'élément 11. Lorsque le renflement 18 se présente au niveau de l'orifice 22, ledit renflement 18 peut revenir vers sa position initiale grâce à l'énergie élastique et pénétrer ainsi à l'intérieur de l'orifice de maintien 22. De cette façon, l'angle 15 est fixé à l'intérieur de l'élément 11 de façon optimale et ne nécessitant aucun outil. L'angle 15 peut être ôté de l'extrémité de l'élément 11 en exerçant une pression sur le renflement 18 et ce afin de déplacer ledit renflement 18 et permettre ainsi le retrait de la protubérance 16 de l'élément 11. Tout outil adapté, tel qu'un tournevis, peut être utilisé pour exercer une certaine pression sur le renflement 18 et permettre la libération de l'angle 15.

Comme indiqué ci-dessus, la face inférieure de l'angle 15 a été représentée sur la figure 2. En d'autres termes, l'entrée de l'orifice 22 étant située sur le sol du coffre d'un véhicule automobile, cela permet d'éviter la libération involontaire de l'angle 15 pendant l'utilisation du cadre 1.

Il convient de comprendre que la solution décrite sur la figure 2 représente l'une des solutions pouvant être envisagées permettant de réaliser un angle 15 adapté pour autoriser la fixation des éléments 11, 12, 13 et 14 et obtenir ainsi le cadre 1.

En ce qui concerne la solution telle que représentée sur la figure 2, l'angle 15 comprend, de préférence, un matériau plastique. L'angle 15 peut, par exemple, être réalisé à l'aide d'un matériau tel que des thermoplastiques, plus particulièrement le polyéthylène ou polypropylène.

L'élément 11 est représenté, en vue de coupe, sur la figure 3. Cette représentation en coupe permet de montrer la forme dudit élément 11. Il convient de comprendre que les autres éléments 12, 13 et 14 ont le même profil que l'élément 11.

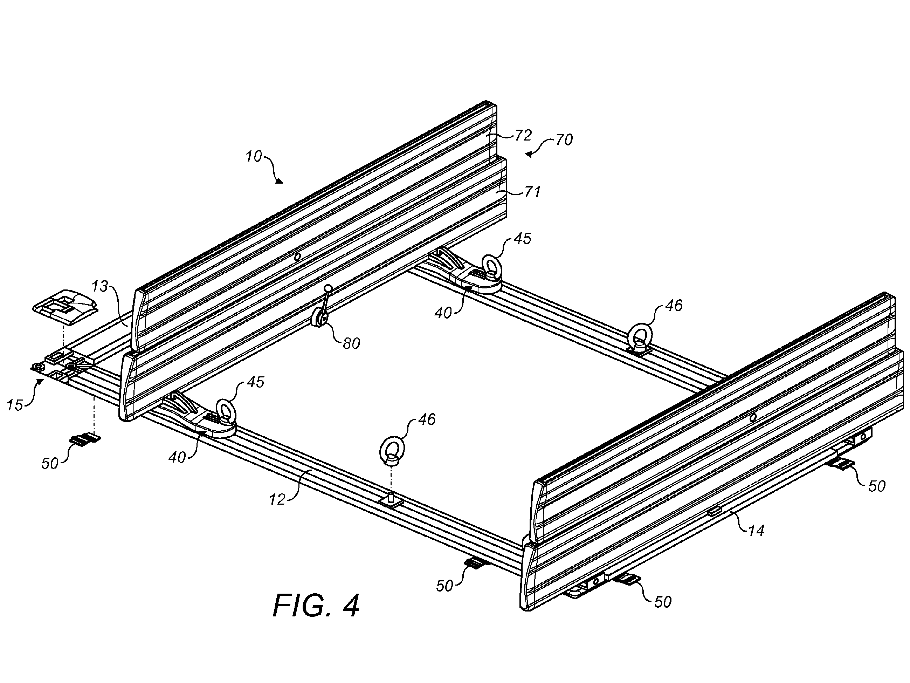

L'élément 11 comprend tout d'abord une ouverture 31 accessible par la face supérieure de l'élément 11. Cette ouverture 31 se présente essentiellement la forme d'un « T » inversé. La partie la plus large de cet élément en « T » est adaptée pour recevoir le pied 41 d'un support 40. Ce support 40 est adapté pour fixer la partie inférieure des cloisons, ladite fixation des cloisons sur le support 40 étant représenté sur la figure 4.

La partie étroite de l'ouverture 31 est adaptée pour autoriser le passage d'un élément 42 permettant la fixation du pied 41 au support 40. Il convient de comprendre que les différents pieds 41 des supports 40 sont introduits à l'intérieur des différents éléments 11, 12, 13 et 14 avant que lesdits éléments 11, 12, 13 et 14 ne soient interconnectés à l'aide des angles 15.

L'élément 11 est pourvu d'une deuxième ouverture 32 accessible par rapport aux parties inférieur dudit élément 11. L'ouverture 32 se présente essentiellement sous la forme d'un « T ». Cette ouverture 32 est adaptée pour recevoir en son intérieur une agrafe 50. L'agrafe 50 est utilisée pour fixer le cadre sur le sol d'un coffre de véhicule automobile.

La figure 3 montre l'option selon laquelle l'élément 11 est fixé sur les extrémités d'un plancher ou dalle de coffre 60 présent à l'intérieur du coffre d'un véhicule automobile. Ledit plancher 60 est, par exemple, le couvercle utilisé pour clore l'espace où est située la roue de secours d'un véhicule automobile. La fixation de l'élément 11 à l'extrémité de ce plancher 60 est réalisée à l'aide d'une première agrafe 50 permettant d'attacher ledit élément 11. L'agrafe 50 est connectée à un crochet 52 grâce à l'aide d'une sangle 51. Le crochet 52 est adapté pour accrocher l'une des extrémités du plancher 60. L'agrafe de 50 est pourvue de fenêtres permettant de passer et tendre la sangle 51. La sangle 51 est pourvue d'un élément de serrage 53 qui, lorsque l'élément 11 est en place, permet de tirer sur l'extrémité 54 de la sangle 51 et ainsi fixer fermement ledit élément 11 à un endroit déterminé. Lors de la fixation de l'élément 11, une manoeuvre identique est nécessaire pour fixer l'élément 12 à l'autre extrémité du plancher 60, de façon similaire à celle montrée pour l'élément 11.

La figure 4 représente le dispositif 10 du soutien selon l'invention, selon une version dite « assemblée ». La figure 4 montre que les éléments 11, 12, 13 et 14 sont assemblés grâce aux angles 15. Les supports 40 sont visibles à l'intérieur du rail formé par les éléments 11 et 12. Les supports 40 sont adaptés pour recevoir et assurer la fixation de la partie inférieure des cloisons 70. Les cloisons 70 sont réalisées à l'aide de tout matériau adapté tel que du plastique ou de l'aluminium. Les cloisons 70 peuvent comprendre un premier élément 71 et un deuxième élément 72. L'avantage de disposer d'une cloison 70 assemblée à l'aide de deux éléments 71 et 72 réside dans le fait qu'un moule d'une dimension permettant d'obtenir les éléments 71 et 72 est moins onéreux qu'un moule d'une dimension permettant d'obtenir une cloison 70 à sa dimension finale.

La figure 4 montre que la partie inférieure de la cloison 70 est reçue à l'intérieur de deux supports 40, lesquels supports se trouvent à l'intérieur de l'élément 11 pour le premier et à l'intérieur de l'élément 12 pour le deuxième. Avant de procéder à la fixation de la cloison 70 sur les supports 40, l'utilisateur peut déplacer ladite cloison 70 dans le sens perpendiculaire par rapport aux éléments 11 et 12 à destination d'un endroit préféré de l'utilisateur. Lorsque ladite partie inférieure de la cloison 70 est fixée sur les deux supports 40, lesdits supports 40 peuvent être déplacés grâce aux éléments 11 et 12 afin d'obtenir une position finale de la cloison 70 par rapport au cadre formé par les éléments 11, 12, 13 et 14. La possibilité de déplacer la cloison 70 par rapport aux supports 40 et de déplacer lesdits supports 40 par rapport au cadre formé par les éléments 11, 12, 13 et 14, offre la liberté de placer la cloison 70 à un endroit préféré de l'utilisateur. Lorsque la cloison 70 est positionnée à l'endroit préféré de l'utilisateur, les deux supports 40 peuvent être fixés à l'intérieur des éléments respectifs 11, 12 grâce à des écrous 45. Il convient de noter que lesdits écrous 45, visibles sur la figure 4, se présentent sous la forme d'un anneau. Lesdits anneaux peuvent être utilisés dans le but de fixer, par exemple, une sangle ou encore un filet afin de fixer des objets par rapport au cadre formé par les éléments 11,12,13 et 14.

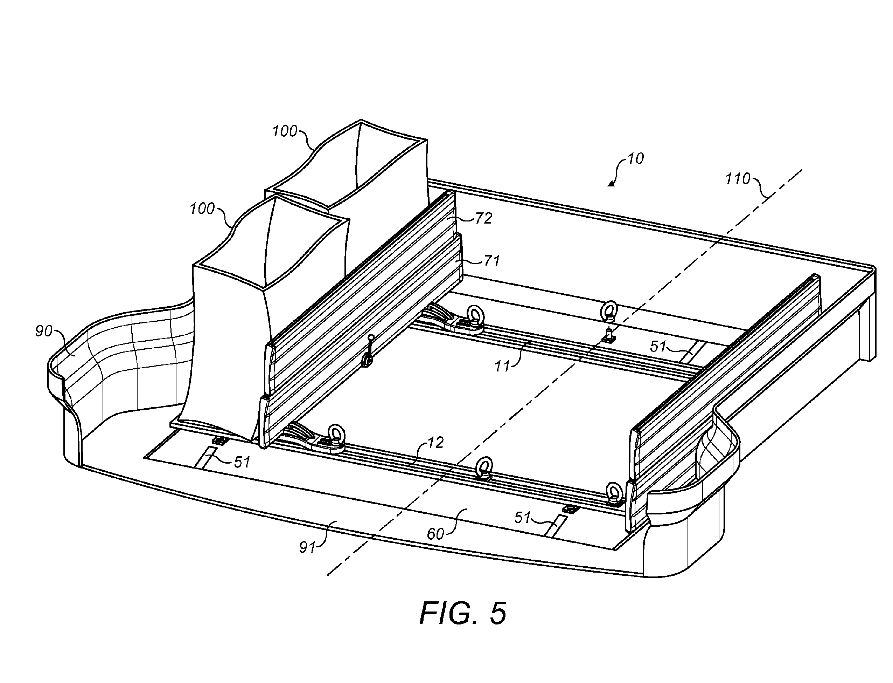

La figure 4 montre également des anneaux 46, lesquels anneaux ne sont pas fixés sur un des supports 40. Lesdits anneaux 46 peuvent être utilisés en complément des cloisons 70. Les cloisons 70 peuvent servir par exemple, et comme montré sur la figure 5, à maintenir des sacs souples. Les anneaux 46 peuvent être utilisés, ensemble et/ou en combinaison avec les anneaux 45, dans le but de fixer des sangles, des filets ou tout autre objet adapté pour maintenir des articles. Les articles concernés peuvent être, par exemple des articles lourds, comme une bouteille de gaz qui doit être fermement maintenue afin de ne pas se déplacer par rapport à son support.

Les différentes agrafes 50 sont également visibles sur la figure 4. Lesdites agrafes peuvent servir à fixer le cadre comprenant les éléments 11, 12, 13 et 14 sur le sol du coffre d'un véhicule automobile, tel que montré sur la figure 3. Pour des raisons de clarté, les sangles 51 et les crochets 52 ne sont pas montrés sur la figure 4. Il convient de comprendre que des agrafes 50 sont également présentes sous les éléments 11 et 13 dans le but d'utiliser l'ensemble des agrafes 50 et fixer le cadre 1 comprenant les éléments 11, 12, 13 et 14 sur le sol du coffre d'un véhicule automobile.

La figure 4 montre également une poignée 80, laquelle poignée est située au centre de la partie inférieure de la cloison 70. Il convient de noter que la poignée 80 peut également être positionnée dans un autre endroit, sur la cloison inférieure de la cloison 70, par exemple plus près de l'élément 12. La poignée 80 sert à débloquer la fixation des supports 40 installés dans les éléments respectifs 11, 12. L'on peut envisager une option selon laquelle la poignée 80 est connectée, grâce à des câbles, à un système de verrouillage présent au sein des différents supports 40. Lorsque le verrouillage est débloqué à l'aide de la poignée 80, l'ensemble composé de la cloison 70 et des deux supports 40 peut être déplacé sur les éléments 11 et 12. En d'autres termes, cet ensemble peut coulisser de façon transversale par rapport au coffre du véhicule automobile dans lequel le dispositif 10 est installé.

L'utilisation du dispositif de soutien 10 selon l'invention, à l'intérieur du coffre d'un véhicule automobile, est montrée, de façon schématique, sur la figure 5. L'intérieur du coffre d'un véhicule automobile est schématiquement montré à l'aide du numéro de référence 90. Le plancher 60 présent sur le sol du coffre du véhicule automobile couvre une partie du fond 91 dudit coffre. Les sangles 51, permettant de maintenir le cadre 1 comprenant les éléments 11, 12, 13 et 14 (tel qu'expliqué en référence à la figure 3), sont également montrées sur la figure 5.

La figure 5 montre que le dispositif de soutien 10 peut être utilisé afin de maintenir des sacs souples 100 positionnés sur le sol 91 de l'intérieur du coffre 90. Lorsque les sacs souples 100 sont correctement positionnés, la cloison 70 peut être déplacée en direction desdits sacs 100 afin de les soutenir de façon optimale et éviter ainsi que ceux-ci ne se renversent pendant leur transport.

Sur la figure 5, la ligne portant le numéro de référence 110 permet de montrer le sens de déplacement du véhicule automobile. La figure 5 représente clairement que, lorsque le coffre est ouvert, l'utilisateur a libre accès à l'intérieur dudit coffre ainsi qu'à l'espace se trouvant entre deux cloisons adjacentes. La présence des cloisons 70 ne présente aucun obstacle lorsque différents objets, tels que des sacs souples 100, sont positionnés à l'intérieur du coffre 90 du véhicule automobile.

Une partie de la cloison 70 est représentée sur la partie gauche de la figure 5. Ladite cloison 70 est montrée dans une position permettant de soutenir des objets tels que des sacs 100. Dans le cas où l'utilisateur ne souhaite pas utiliser le dispositif de soutien 10, il n'est pas nécessaire d'ôter ledit dispositif du coffre 90 du véhicule automobile. En effet, au lieu de cela, l'utilisateur peut déplacer la cloison 70 vers l'une des extrémités afin que ladite cloison 70 soit tout contre la cloison de l'intérieur du coffre 90. Cette position de repos est représentée sur la partie droite de la figure 5.

Le dispositif selon la présente invention, comprenant un châssis se présentant sous la forme d'un cadre permettant de fixer ledit dispositif sur le sol du coffre d'un véhicule automobile, présente un autre avantage selon lequel les différents éléments 11, 12, 13 et 14 qui forment ledit cadre peuvent être fournis avec un dispositif lumineux tel qu'une lame. Ce dispositif lumineux peut se présenter sous la forme d'un ou de plusieurs LED qui, par exemple peuvent être de forme rectangulaire, sont fixées sur l'extérieur d'un ou de plusieurs éléments 11, 12, 13 et 14. Lorsque les LED sont installées, leur fonctionnement peut être géré en simultané lors de l'ouverture du coffre du véhicule automobile, c'est-à-dire que le dispositif s'allume dès lors que le coffre est ouvert. De façon alternative, le fonctionnement des LED peut être géré à l'aide d'un bouton poussoir permettant d'allumer et éteindre la lumière ou encore à l'aide de toute autre moyen adapté.

Afin de fournir le dispositif lumineux tel que des LED avec du courant, le dispositif selon la présente invention peut être connecté sur le système électrique du véhicule automobile concerné. De façon alternative, les éléments 11, 12, 13 et 14 pourraient intégrer une source d'énergie électrique indépendante telle que des piles.

## Revendications

1. Dispositif (10) pour fixer au moins une cloison (70) à l'intérieur du coffre (90) d'un véhicule automobile dans lequel ledit dispositif (10) comprend un châssis comportant des éléments (11, 12, 13, 14) mutuellement connectés afin de former, en combinaison, un cadre, dans lequel deux éléments longitudinaux (13, 14) sont adaptés pour être positionnés dans le sens de direction du véhicule et deux éléments transversaux (11, 12) sont adaptés pour être positionnés de façon essentiellement perpendiculaire par rapport au véhicule et dans lequel les deux éléments transversaux (11, 12) dudit cadre disposant d'un rail permettant de recevoir en leur intérieur un premier et un deuxième support (40), chacun dudit support (40) étant adapté pour fixer sur lui-même la partie inférieure de cette au moins une cloison (70), dans lequel le premier et le deuxième support (40) sont chacun connectés avec un mécanisme permettant de bloquer et de débloquer ledit support (40) dans le rail afin d'autoriser le déplacement de l'ensemble des supports (40) et de la cloison (70) par rapport aux éléments transversaux (11, 12).

2. Dispositif (10) selon la revendication 1, dans lequel les éléments (11, 12, 13, 14) permettant de former le cadre sont réalisés en aluminium.

3. Dispositif (10) selon l'une des revendications 1 ou 2, dans lequel les éléments (11, 12, 13, 14) permettant de former le cadre sont mutuellement connectés avec des angles (15).

4. Dispositif (10) selon la revendication 3 dans lequel l'angle (15) est composé d'un matériau tel que du plastique ou métallique.

5. Dispositif (10) selon l'une des revendications précédentes dans lequel le dispositif (10) est pourvu d'agrafes (50) permettant la fixation du châssis sur le sol du coffre d'un véhicule automobile.

6. Dispositif (10) selon l'une des revendications précédentes dans lequel les éléments (11, 12, 13, 14) sont adaptés pour recevoir et fixer des anneaux (45, 46).

7. Dispositif (10) selon l'une des revendications précédentes dans lequel les éléments (11, 12, 13, 14) permettant de former le cadre sont pourvus d'un dispositif lumineux tel qu'une lampe.
